(19) Europäisches Patentamt / European Patent Office / Office européen des brevets

(11) **EP 2 753 508 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(21) Anmeldenummer: **12756195.9**

(22) Anmeldetag: **07.09.2012**

(51) Int Cl.:
**B60T 8/17** (2006.01)

(86) Internationale Anmeldenummer:
**PCT/EP2012/067515**

(87) Internationale Veröffentlichungsnummer:
**WO 2013/034691 (14.03.2013 Gazette 2013/11)**

(54) **BREMSSTEUEREINRICHTUNG FÜR SCHIENENFAHRZEUGE, VERFAHREN ZUR BREMSTEUERUNG FÜR SCHIENENFAHRZEUGE UND COMPUTERPROGRAMMPRODUKT**

BRAKE CONTROL DEVICE FOR RAIL VEHICLES, BRAKE CONTROL METHOD FOR RAIL VEHICLES AND COMPUTER PROGRAMME PRODUCT

DISPOSITIF DE COMMANDE DE FREINAGE POUR VÉHICULES FERROVIAIRES, PROCÉDÉ DE COMMANDE DE FREINAGE POUR VÉHICULES FERROVIAIRES ET PRODUIT PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2011 DE 102011113117**

(43) Veröffentlichungstag der Anmeldung:
**16.07.2014 Patentblatt 2014/29**

(73) Patentinhaber: **KNORR-BREMSE Systeme für Schienenfahrzeuge GmbH 80809 München (DE)**

(72) Erfinder:
• MAYER, Reinhold
  85757 Karlsfeld (DE)
• RASEL, Thomas
  85635 Höhenkirchen-Siegertsbrunn (DE)
• HERDEN, Marc-Oliver
  81377 München (DE)
• WACH, Joerg-Johannes
  81247 München (DE)

(56) Entgegenhaltungen:
EP-A1- 2 147 840       WO-A1-2006/113954
WO-A2-2010/069520

EP 2 753 508 B1

**Beschreibung**

Die vorliegende Erfindung betrifft eine Bremssteuereinrichtung für Schienenfahrzeuge mit einer druckbetätigten Bremseinrichtung, ein Bremssystem für Schienenfahrzeuge mit einer solchen Bremssteuereinrichtung, ein Verfahren zur Bremssteuerung für Schienenfahrzeuge sowie ein entsprechendes Computerprogrammprodukt. Ein Verfahren mit den Merkmalen des Oberbegriffs des Anspruchs 1 ist aus der EP 2 147 840 A1 bekannt.

Als hauptsächliche Systembremsen für moderne Schienenfahrzeuge werden in der Regel Reibungsbremseinrichtungen verwendet, die beispielsweise druckbetätigte - also pneumatische oder hydraulische - Bremseinrichtungen sein können. Eine Reibungsbremseinrichtung kann allgemein insbesondere eine sogenannte kraftschlussabhängige Reibungsbremseinrichtung sein, welche beim Bremsen eine durch Reibung erzeugte Bremskraft über einen Rad-Schiene-Kontakt überträgt. Bremsen wie Magnetschienenbremsen, welche ihre Bremskraft nicht über ein Rad übertragen, werden in diesem Sinne nicht als kraftschlussabhängige Bremsen angesehen. Typische kraftschlussabhängige Reibungsbremseinrichtungen sind Scheibenbremseinrichtungen, Klotzbremseinrichtungen oder kombinierte Klotz-/ Scheibenbremseinrichtungen. Bei Reibungsbremseinrichtungen wird ein pneumatischer oder hydraulischer Druck oder ein Bremsstrom dazu verwendet, eine Betätigungskraft zu erzeugen, die auf eine einem Rad oder einer Achse eines Schienenfahrzeugs zugeordnete Reibungsbremse ausgeübt wird. Dabei kann beispielsweise durch die Betätigungskraft ein Bremsklotz auf ein Rad wirken oder eine Bremszange Bremsbeläge in reibenden Kontakt mit einer mit dem Rad oder der Achse verbundenen Bremsscheibe bringen. Allgemein bezeichnet eine Betätigungskraft eine Kraft, die durch einen Krafterzeuger auf Reibkomponenten einer Reibungsbremseinrichtung ausgeübt wird, um zur Bremsung eine Reibung zu erzeugen. Eine Bremskraft ist eine Kraft, die bei einer Betätigung einer Bremseinrichtung zur Verzögerung eines Schienenfahrzeugs wirksam ist. Die tatsächlich für eine Bremsung umsetzbare Bremskraft wird dabei maßgeblich einerseits von einem Reibungsbeiwert zwischen den durch die Bremsung in reibenden Kontakt gebrachten Komponenten bestimmt, etwa beispielsweise der Bremsscheibe und dem Belag oder dem Bremsklotz und dem Rad. Andererseits spielt insbesondere bei Reibungsbremseinrichtungen der sogenannte Adhäsionsbeiwert eine entscheidende Rolle, der ein Maß für die maximal zwischen dem zu bremsenden Rad und der Schiene zur Bremsung übertragbare Kraft angibt. Der Adhäsionsbeiwert ist insbesondere abhängig vom Schlupf, also von einem Geschwindigkeitsunterschied zwischen dem Fahrzeug und dem Rad. Um zu verhindern, dass die Räder blockieren beziehungsweise anfangen zu gleiten, sollte die bei einer Bremsung auf das Rad wirkende Kraft geringer sein als das Maß an Kraft, das gemäß dem Adhäsionsbeiwert auf die Schiene aufgebracht werden kann. Bei herkömmlichen Bremssystemen wird dabei in der Regel davon ausgegangen, dass innerhalb eines Geschwindigkeitsbereichs bis etwa 200 km/h der Adhäsionsbeiwert konstant ist. Häufig wird er auf einen Wert von 0,15 gesetzt. Für Geschwindigkeiten, die 200 km/h überschreiten, wird in der Regel ein ebenfalls konstanter, aber niedrigerer Adhäsionsbeiwert angenommen. Dabei ist der angenommene Adhäsionsbeiwert jeweils so gewählt, dass er niedrig genug ist, um zu vermeiden, dass eine zu hohe Kraft auf das Rad wirkt. Dies kann dazu führen, dass weniger Bremskraft aufgebracht wird, als über die Schiene aufgenommen werden könnte, und so der Bremsweg eines Schienenfahrzeugs länger ist, als er eigentlich sein müsste.

Eine Aufgabe der vorliegenden Erfindung besteht darin, eine verbesserte Bremssteuereinrichtung beziehungsweise ein verbessertes Verfahren zum Steuern einer Bremseinrichtung für Schienenfahrzeuge mit einer Reibungsbremseinrichtung bereitzustellen. Ferner soll ein entsprechendes Bremssystem beziehungsweise ein entsprechendes Computerprogrammprodukt bereitgestellt werden.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Erfindungsgemäß ist eine Bremssteuereinrichtung für Schienenfahrzeuge mit einer Reibungsbremseinrichtung vorgesehen. Die Bremssteuereinrichtung ist dazu ausgelegt, einen tatsächlichen Adhäsionsbeiwert zwischen mindestens Rad des Schienenfahrzeugs und einer mit dem Rad in Kontakt stehenden Schiene zu ermitteln. Ferner ist die Bremssteuereinrichtung dazu ausgelegt, einen Bremssollwert basierend auf dem tatsächlichen Adhäsionsbeiwert zu berechnen und die Reibungsbremseinrichtung zum Bremsen mindestens eines zu bremsenden Rades basierend auf dem Bremssollwert anzusteuern. Die Reibungsbremseinrichtung kann insbesondere eine kraftschlussabhängige Reibungsbremseinrichtung sein. Eine Reibungsbremseinrichtung kann einen oder mehrere Krafterzeuger zum Erzeugen einer Betätigungskraft aufweisen. Ein Krafterzeuger kann pneumatisch, hydraulisch oder elektrisch betätigbar sein. Ein zum Betätigen eines Krafterzeugers wirksamer pneumatischer oder hydraulischer Druck kann als Bremsdruck bezeichnet werden. Analog kann ein zum Betätigen eines Krafterzeugers wirksamer elektrischer Strom als Bremsstrom bezeichnet werden. Ein Krafterzeuger vermag es, einen Bremsdruck oder einen Bremsstrom in eine Betätigungskraft umzusetzen. Eine Reibungsbremseinrichtung kann entsprechend eine pneumatische, hydraulische oder elektrische oder elektromechanische Reibungsbremseinrichtung sein. Die Bremssteuereinrichtung kann zur Ansteuerung mit der Reibungsbremseinrichtung verbunden oder verbindbar sein. Eine pneumatische oder hydraulische Reibungsbremseinrichtung kann dabei einen Bremsaktuator oder Krafterzeuger umfassen, der durch einen pneumatischen oder hydraulischen Druck eine Betätigungskraft für das zu bremsende Rad erzeugt, während eine elektrische oder elektromechanische Reibungsbremseinrichtung einen Bremsaktuator oder Krafterzeuger umfassen kann, der einen Bremsstrom in eine Betätigungskraft für das zu bremsende Rad erzeugt. Ein Krafterzeuger kann beispielsweise ein pneumatischer oder hydraulischer Zylinder sein, der es vermag, einen Bremsdruck in eine Betätigungskraft umzusetzen. Bei einer Betätigung einer Reibungsbremseinrichtung oder eines Krafterzeugers kann beispielsweise eine Bremszange einen oder mehrere Bremsbelagträger einer Scheibenbremse oder Bremsklötze betätigen. Eine druckbetätigte Reibungsbremseinrichtung wie eine hydraulische oder pneumatische Bremseinrichtung kann auch elektrische Komponenten enthalten, beispielsweise ein oder mehrere Magnetventile. Die Bremssteuereinrichtung kann dazu ausgelegt sein, derartige Magnetventile anzusteuern. Ein oder mehrere Magnetventile können als Vorsteuerventile ausgebildet sein, um pneumatische oder hydraulische Ventile anzusteuern. Das zu bremsende Rad kann auf einer Radachse angeordnet sein. Es ist vorstellbar, dass die Bremseinrichtung zum Bremsen des Rades die Achse bremst. Das Rad kann aus einem metallischen Material, insbesondere aus einem Stahl hergestellt sein. Insbesondere können Rad und Schiene aus metallischen Materialien wie Stahl hergestellt sein. Zweckmäßigerweise kann vorgesehen sein, dass die Bremssteuereinrichtung dazu ausgelegt ist, den tatsächlichen Adhäsionsbeiwert während eines Betriebs oder einer Fahrt des Schienenfahrzeugs zu ermitteln. Der tatsächliche Adhäsionsbeiwert kann durch eine Messung bestimmt werden. Dazu kann eine geeignete Sensoreinrichtung vorgesehen sein, die zur Übermittlung von Daten mit der Bremssteuereinrichtung verbunden oder verbindbar ist. Beispielsweise kann eine nicht gebremste oder zu Messzwecken gezielt überbremste Schleifachse auf der Schiene mitgeführt werden, an der eine Adhäsionsbeiwertmessung durchgeführt wird. Es ist vorstellbar, dass der Adhäsionsbeiwert aus theoretischen Modellen und/oder experimentell ermittelt wird. Die Bremssteuereinrichtung kann Teil eines elektropneumatischen oder elektrohydraulischen oder elektrischen oder elektromechanischen Bremssystems sein. Das Bremssystem, das durch die Bremssteuereinrichtung gesteuert wird, kann auch noch weitere Bremsarten wie beispielsweise Magnetbremsen und/oder Wirbelstrombremsen aufweisen. Diese können durch die Bremssteuereinrichtung ansteuerbar sein. Durch das Berechnen des Bremssollwerts basierend auf dem tatsächlichen Adhäsionsbeiwert kann das Bremsverhalten des Schienenfahrzeugs beziehungsweise des gebremsten Rades optimiert werden.

Beispielsweise kann eine Bremsung derart durchgeführt werden, dass eine maximale Bremskraftübertragung auf die Schiene stattfindet, und so ein Schienenfahrzeug schnell und sicher abgebremst wird, ohne dass ein unerwünschtes Blockieren beziehungsweise Gleiten stattfindet. Im Rahmen dieser Beschreibung entspricht der Adhäsionsbeiwert einem maximalen Kraftschlussbeiwert zwischen Rad und Schiene. Dieser kann beispielsweise von Haft- und Rollreibungseffekten bestimmt werden. Der Kraftschlussbeiwert $\mu_S$ kann definiert werden als

$$(1) \qquad \mu_s = \frac{F_{BR}}{F_A} \leq \mu_{S,\max}$$

wobei $F_{BR}$ der Gleitreibungskraft der Bremse entspricht, beispielsweise zwischen dem Rad und einem Bremsklotz und $F_A$ der Radaufstandskraft entspricht. Die Gleitreibungskraft entspricht dabei einer durch die Reibung der Bremskomponenten modifizierten Betätigungskraft. Für den Fall vernachlässigbarer Radbeschleunigung kann die Beziehung (1) geschrieben werden als:

$$(2) \qquad \mu_s = \frac{F_{BR}}{F_A} = \frac{\mu_K F_K}{m_A \cdot g} \leq \mu_{S,\max}$$

wobei $m_A$ der auf das betrachtete Rad wirksamen Masse, $g$ der Erdbeschleunigung, $\mu_K$ dem Gleitreibungsbeiwert an der Bremse und $F_K$ der tatsächlich zur Betätigung auf die Bremse ausgeübten Betätigungskraft entspricht. Dabei gilt weiter $F_A = m_A \cdot g$. Die maximale Kraftübertragung wird durch den tatsächlichen Adhäsionsbeiwert $\mu_{S,\max}$ definiert. Insbesondere kann der tatsächliche Adhäsionsbeiwert ein zeitlich veränderlicher Wert sein, der von den Schienenverhältnissen und einem Schlupf abhängt. Zur Bremsung des Rads gegenüber der Schiene wird eine wirksame Bremskraft von $F_S = \mu_S \cdot F_A$ aufgebracht, wobei $\mu_S$ den Maximalwert $\mu_{S,\max}$ nicht überschreiten kann. Es ist vorstellbar, dass der tatsächliche Adhäsionsbeiwert ein Adhäsionsbeiwert für das zu bremsende Rad ist. Er kann allerdings auch für ein anderes Rad bestimmt sein oder werden. Es kann davon ausgegangen werden, dass tatsächliche Schienenverhältnisse den wichtigsten Beitrag für den tatsächlichen Adhäsionsbeiwert zwischen Rad und Schiene darstellen, so dass über eine Länge des Schienenfahrzeugs beziehungsweise eine Wagenlänge auch ein solcher tatsächlicher Adhäsionsbeiwert eine gute Grundlage für eine Regelung oder Steuerung eines Bremssollwertes für ein Rad darstellt. Je näher $\mu_S$ dem Maximalwert $\mu_{S,\max}$ kommt, desto mehr Bremskraft kann wirksam zur Bremsung auf die Schiene übertragen werden. Die Bremssteuereinrichtung kann zu einer Regelung des Bremssollwertes ausgebildet sein.

Der Bremssollwert kann ein pneumatischer oder hydraulischer Bremsdruck oder ein Bremsstrom sein, welcher der Reibungsbremseinrichtung zugeführt wird. Ein oder mehrere Krafterzeuger der Reibungsbremseinrichtung können den Bremsdruck oder Bremsstrom in eine Betätigungskraft umsetzen, um die Bremskraft zu erzeugen. Insbesondere kann der Bremsdruck oder der Bremsstrom einem Krafterzeuger der Reibungsbremseinrichtung zugeführt werden, was als Zuführen von Bremsdruck oder Bremsstrom zur Reibungsbremseinrichtung angesehen werden kann. Beispielsweise kann eine Regelgröße für die Bremssteuereinrichtung ein Bremsdruck sein, der sich verhältnismäßig einfach über ein oder mehrere ansteuerbare Ventile einstellen lässt. Dies macht die Bremssteuereinrichtung insbesondere besonders kompatibel mit bisher verwendeten pneumatischen oder hydraulischen Reibungsbremseinrichtungen. Es ist auch vorstellbar, dass ein Bremsstrom als Regelgröße für die Bremssteuereinrichtung verwendet wird. Ein elektrischer Bremsstrom lässt sich besonders leicht und ohne große zeitliche Verzögerung einstellen.

Es ist vorstellbar, das der Bremssollwert eine Bremswirkung beschreibt, welche durch die Bremseinrichtung bereitzustellen ist. Eine Bremswirkung kann beispielsweise eine Betätigungskraft und/oder eine Bremskraft und/oder ein Bremsmoment sein. Es ist vorstellbar, dass die Bremssteuereinrichtung mit einer Bremswirkungssensoreinrichtung verbunden oder verbindbar ist, um Bremswirkungsdaten zu empfangen. Eine Bremswirkungssensoreinrichtung kann dazu ausgebildet sein, eine Betätigungskraft und/oder eine Bremskraft und/oder ein Bremsmoment zu erfassen, welche bei einer Bremsung auf eine zugeordnete Bremseinrichtung und/oder ein Rad wirken. Bremswirkungsdaten sind Daten, welche eine durch eine Bremswirkungssensoreinrichtung erfasste Betätigungskraft und/oder Bremskraft und/oder ein erfasstes Bremsmoment betreffen oder repräsentieren. Es kann vorgesehen sein, dass die Bremssteuereinrichtung dazu ausgebildet ist, basierend auf Bremswirkungsdaten eine wirkende Betätigungskraft, Bremskraft und/oder ein wirkendes Bremsmoment zu bestimmen. Es ist vorstellbar, dass die Regelgröße für die Bremssteuereinrichtung eine Betätigungskraft und/oder eine Bremskraft und/oder ein Bremsmoment ist.

Der Bremssollwert kann eine Drehzahl sein, insbesondere eine Drehzahl des Rades. Es ist vorstellbar, dass die Regelgröße für die Bremssteuereinrichtung eine Drehzahl ist. Damit wird auf die tatsächlich relevante Größe für die Bremsung, nämlich die Drehzahl des Rades geregelt oder gesteuert, und nicht eine indirekte Größe wie beispielsweise den oben erwähnten pneumatischen Bremsdruck.

Es kann zweckmäßig sein, dass die Bremssteuereinrichtung mit einer Sensoreinrichtung verbunden oder verbindbar ist, welche zur Ermittlung des Adhäsionsbeiwertes Daten an die Bremssteuereinrichtung zu übertragen vermag. Das Empfangen von Daten durch die Bremssteuereinrichtung kann als Ermitteln des Adhäsionsbeiwerts angesehen werden. Es kann auch vorgesehen sein, dass die Bremssteuereinrichtung aus den Daten den Adhäsionsbeiwert berechnet. Die Sensoreinrichtung kann beispielsweise an einer dafür vorgesehenen Achse oder einem Rad des Schienenfahrzeugs angeordnet sein.

Die Bremssteuereinrichtung kann dazu ausgelegt sein, den tatsächlichen Adhäsionsbeiwert in regelmäßigen zeitlichen Intervallen zu bestimmen. Dies ermöglicht, den ermittelten tatsächlichen Adhäsionsbeiwert regelmäßig zu aktualisieren und so Änderungen der Fahrzustände des Schienenfahrzeugs zu erfassen.

Bei einer Weiterbildung kann die Bremssteuereinrichtung ferner dazu ausgelegt sein, einen Schlupf zwischen dem mindestens einen zu bremsenden Rad und der Schiene zu ermitteln. Der tatsächliche Adhäsionsbeiwert und der Schlupf hängen stark miteinander zusammen. Durch Erfassen des Schlupfes lässt sich somit eine genaue Beschreibung der Fahrzustände des Schienenfahrzeugs erreichen. Der Schlupf ist allgemein definiert als die Differenz zwischen der Translationsgeschwindigkeit des Schienenfahrzeugs $v_f$ und der Umfangsgeschwindigkeit des betrachteten Rades $v_r$ bezogen auf die Translationsgeschwindigkeit $v_f$ und kann beschrieben werden als $\Delta v = (v_f - v_r) / v_f$. Die Übertragung einer Bremskraft bei einem rollenden Rad ist immer mit einem Schlupf verbunden. Zum Bestimmen des Schlupfes $\Delta v$ können beispielsweise geeignete Sensoreinrichtungen vorgesehen sein, über die einerseits eine Radumfangsgeschwindigkeit beziehungsweise eine Drehzahl des Rades als Basis für die Ermittlung der Radumfangsgeschwindigkeit ermittelt werden kann. Über einen Fahrtgeschwindigkeitssensor kann die Geschwindigkeit des Schienenfahrzeugs ermittelt werden, beispielsweise durch eine Radarmessung. Allgemein kann die Bremssteuereinrichtung dazu ausgebildet sein, Schlupfwerte $\Delta v$ und/oder Radumlaufgeschwindigkeitswerte $v_r$ und/oder Fahrgeschwindigkeitswerte $v_f$ von geeigneten Einrichtungen zu empfangen. Es ist vorstellbar, dass die Bremssteuereinrichtung dazu ausgelegt ist, basierend auf einem oder mehreren Wertepaaren von Schlupf und Adhäsionsbeiwert eine Schlupf-Adhäsionsbeiwert-Kennlinie zu bestimmen, auf der sich das Schienenfahrzeug oder das Rad gerade befindet.

Die Bremssteuereinrichtung kann dazu ausgelegt sein, eine Schlupfregelung durchzuführen. Somit kann beispielsweise der Kraftschlussbeiwert maximiert oder möglichst nahe an den Adhäsionsbeiwert herangeführt werden, so dass eine maximale wirksame Bremskraft auf das Schienenfahrzeug ausgeübt werden kann, ohne in ein Gleiten überzugehen. Damit kann insbesondere das Bilden von Flachstellen an den Rädern verringert oder vermieden werden.

Bei einer Weiterbildung ist die Bremssteuereinrichtung dazu ausgelegt, die Schlupfregelung basierend auf vorbestimmten Schlupf-Adhäsionsbeiwert-Kennlinien durchzuführen. Eine derartige Kennlinie kann den Zusammenhang zwischen einer Adhäsion und einem Schlupf bei bestimmten äußeren Bedingungen beschreiben. Es ist vorstellbar, dass die Kennlinien experimentell und/oder theoretisch für das Schienenfahrzeug und/oder einzeln für einen oder mehrere Wagen des Schienenfahrzeugs und/oder dessen Räder bestimmt werden. Die Kennlinien können in einer geeigneten Speichervorrichtung gespeichert sein, auf welche die Bremssteuereinrichtung zugreifen kann.

Alternativ zu den oben genannten Merkmalen oder im Zusammenhang mit einem oder mehreren dieser Merkmale kann eine Bremssteuereinrichtung für Schienenfahrzeuge mit einer Reibungsbremseinrichtung vorgesehen sein, wobei die Bremssteuereinrichtung dazu ausgelegt ist, eine Schlupfregelung für ein durch die Reibungsbremseinrichtung zu bremsendes Rad durchzuführen, das mit einer Schiene in Kontakt steht. Dabei ist vorgesehen, dass die Bremssteuereinrichtung das zu bremsende Rad zeitweise in einen Blockierzustand steuert. Das Steuern in einen Blockierzustand kann dabei das Überführen des Rades in einen Blockierzustand und/oder das Halten des Rades im Blockierzustand umfassen. Ein Steuern durch die Bremssteuereinrichtung kann als eine Regelung erfolgen. Es kann insbesondere vorgesehen sein, das zu bremsende Rad abwechselnd und/oder wiederholt in einen Blockierzustand und einen rollenden Zustand zu steuern, so dass sich ein Blockieren und ein Rollen des Rades oder zweier über eine Achse verbundener Räder abwechseln. Somit können, beispielsweise bei schlechten Schienenbedingungen, das Rad gesäubert und/oder seine Laufeigenschaften verbessert werden. Darüber hinaus kann ein Schienenreinigungseffekt und/oder eine Verbesserung der Kontaktoberfläche der Schiene erreicht werden. Somit kann auf diese Art allgemein der Adhäsionsbeiwert sowohl für das einzelne zum Blockieren gebrachte Rad als auch für nachfolgende Räder verbessert werden. Die Reibungsbremseinrichtung kann insbesondere eine kraftschlussabhängige Reibungsbremseinrichtung sein. Es ist vorstellbar, dass zum Steuern eines Rades in einen Blockierzustand ein eventuell vorhandener Gleitschutz für das Rad umgangen wird, etwa indem der Blockierzustand nur für kurze Momente angesteuert wird und/oder eine Gleitschutzauslösung durch geeignete Ansteuerung unterdrückt wird.

Bei einer Weiterbildung kann die Bremssteuereinrichtung dazu ausgelegt sein, eine Schlupfregelung für mindestens ein erstes Rad und mindestens ein zweites Rad derart auszuführen, dass das erste Rad in einen Blockierzustand gesteuert wird und das zweite Rad in einen nicht blockierenden Zustand gesteuert wird. Eine Steuerung kann als Regelung der Zustände der Räder erfolgen. Insbesondere kann vorgesehen sein, dass das zweite Rad in Fahrtrichtung des Schienenfahrzeugs hinter dem ersten Rad angeordnet ist, um so von der Verbesserung des Adhäsionsbeiwertes zu profitieren.

Es kann ferner ein Bremssystem für Schienenfahrzeuge mit einer Reibungsbremseinrichtung vorgesehen sein, welches eine hierin beschriebene Bremssteuereinrichtung umfasst. Das Bremssystem kann insbesondere eine oder mehrere pneumatische, hydraulische, elektropneumatische oder elektrohydraulische, elektrische oder elektromechanische Reibungsbremseinrichtungen aufweisen, die durch die Bremssteuereinrichtung ansteuerbar sind und die insbesondere kraftschlussunabhängige Reibungsbremseinrichtungen sein können. Eine elektropneumatische Bremseinrichtung kann eine pneumatische Bremseinrichtung, beispielsweise mit einem pneumatischen Zylinder, und elektrisch ansteuerbare Ventile umfassen. Eine elektrohydraulische Bremseinrichtung kann eine hydraulische Bremseinrichtung, beispielsweise mit einem hydraulischen Zylinder, und elektrisch ansteuerbare Ventile umfassen. Es ist auch ein Schienenfahrzeug mit einem derartigen Bremssystem vorstellbar.

Ferner kann ein Verfahren zum Steuern einer Bremsung für Schienenfahrzeuge mit einer Reibungsbremseinrichtung vorgesehen sein, bei dem insbesondere eine hierin beschriebene Bremssteuereinrichtung verwendet wird. Das Verfahren umfasst einen Schritt des Bestimmens eines tatsächlichen Adhäsionswertes zwischen einem Rad des Schienenfahrzeugs und einer mit dem Rad in Kontakt stehenden Schiene, einen Schritt des Berechnens eines Bremssollwertes basierend auf dem tatsächlichen Adhäsionsbeiwert und einen Schritt des Ansteuerns der Reibungsbremseinrichtung basierend auf dem Bremssollwert zum Bremsen eines zu bremsenden Rades. Diese Schritte können durch eine hierin beschriebene Bremssteuereinrichtung durchgeführt werden. Die Reibungsbremseinrichtung kann eine hierein beschriebene Reibungsbremseinrichtung sein. Das Bestimmen eines tatsächlichen Adhäsionswertes kann das Empfangen entsprechender Daten durch die Bremssteuereinrichtung umfassen. Das Bestimmen des tatsächlichen Adhäsionsbeiwertes kann in regelmäßigen zeitlichen Intervallen erfolgen. Ferner kann ein Schritt des Bestimmens eines Schlupfes zwischen dem mindestens einen zu bremsenden Rad und der Schiene vorgesehen sein. Es kann ein Schritt des Durchführens einer Schlupfregelung vorgesehen sein. Bei einer Schlupfregelung kann basierend auf dem tatsächlichen Adhäsionsbeiwert und einem bekannten Schlupf ein optimaler Schlupf eingestellt werden, bei dem beispielsweise eine Maximierung des Kraftschlussbeiwertes bei den vorliegenden Fahrtbedingungen erfolgen kann, ohne dass ein unerwünschtes Gleiten auftritt. Ein Regeln des Schlupfes kann basierend auf vorbestimmte Schlupf-Adhäsionsbeiwert-Kennlinien durchgeführt werden. Unabhängig davon, ob ein tatsächlicher Adhäsionsbeiwert bestimmt wurde oder nicht, kann eine Schlupfregelung oder Steuerung derart ausgeführt werden, dass das zu bremsende Rad in einen Blockierzustand gesteuert oder geregelt wird. Insbesondere kann die Bremssteuereinrichtung die Bremseinrichtung derart ansteuern, dass das zu bremsende Rad in einen Blockierzustand überführt beziehungsweise in einem solchen Zustand gehalten wird. Ein Steuern oder Regeln des Schlupfes kann für mindestens ein erstes Rad und mindestens ein zweites Rad derart ausgeführt werden, dass das erste Rad in einen Blockierzustand gesteuert wird und das zweite Rad in einen nicht blockierenden Zustand gesteuert wird.

Es kann außerdem ein Computerprogrammprodukt vorgesehen sein, welches auf einem Speichermedium gespeichert ist, wobei das Computerprogrammprodukt auf einer Bremssteuereinrichtung lauffähig ist und es vermag, die Bremssteuereinrichtung dazu zu instruieren, ein hierin beschriebenes Verfahren auszuführen.

Allgemein kann die Bremssteuereinrichtung mit einem pneumatischen, hydraulischen, elektropneumatischen, elektrohydraulischen, elektrischen oder elektromechanischen Bremssystem und/oder einer solchen Bremseinrichtung verbunden oder verbindbar sein. Das Bremssystem und/oder die Bremseinrichtung kann eine hierin beschriebene Reibungsbremseinrichtung umfassen oder sein, insbesondere eine kraftschlussabhängige Reibungsbremseinrichtung. Die Bremssteuereinrichtung kann jede geeignete Art von Bremssteuereinrichtung sein, insbesondere ein Bremsrechner und/oder ein Bordrechner eines Schienenfahrzeugs. Die Bremssteuereinrichtung kann auch als separate Komponente ausgebildet sein und beispielsweise mit einem Bremsrechner und/oder einem Bordrechner verbunden oder verbindbar sein. Eine Bremssteuereinrichtung kann zum Ansteuern von Rädern eines Wagens eines Schienenfahrzeugs oder mehr als eines Wagens vorgesehen sein. Ein Schienenfahrzeug kann einen oder mehrere Wagen mit oder ohne eigenen Antrieb und/oder ein Zugfahrzeug in beliebiger Kombination bezeichnen. Ein Bremssystem kann eine oder mehrere Bremseinrichtungen umfassen, die verschiedenen Rädern, Radachsen, Drehgestellen und/oder Wagen des Schienenfahrzeugs zugeordnet sein können.

Die Erfindung wird nun mit Bezug auf die begleitenden Zeichnungen anhand bevorzugter Ausführungsformen beispielhaft erläutert.

Es zeigen:

Figur 1 ein schematisches Diagramm beispielhafter Schlupf-Adhäsionsbeiwert-Kennlinien;

Figur 2 ein schematisches Diagramm einer beispielhaften Schlupf-Adhäsionsbeiwert-Kennlinie, bei der ein Rad in einen Blockierzustand getrieben ist;

Figur 3 schematisch eine beispielhaftes Bremssystem; und

Figur 4 ein Flussdiagramm für ein beispielhaftes Verfahren zum Steuern einer Bremseinrichtung.

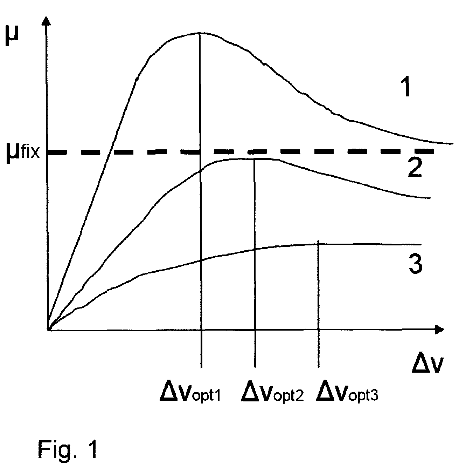

In Figur 1 ist schematisch ein Diagramm beispielhafter Schlupf-Adhäsionsbeiwert-Kennlinien gezeigt. Auf der horizontalen x-Achse ist ohne Bemaßung ein Schlupf $\Delta v$ zwischen einem Rad und einer Schiene aufgetragen. Die vertikale y-Achse gibt einen Adhäsionsbeiwert $\mu$ an. Gezeigt sind drei Kurven 1, 2 und 3, wobei die erste Kurve 1 einer trockenen Schiene entspricht, die zweite Kurve 2 einer nassen Schiene und die dritte Kurve 3 einer geölten Schiene. Der genaue Kurvenverlauf hängt auch von Rauhigkeit, Material, Temperatur und weiteren Parametern der Schiene und des Rades ab. Wie zu erkennen ist ergibt sich für einen niedrigen Schlupf $\Delta v$ ein niedriger anfänglicher Adhäsionsbeiwert $\mu$. Mit ansteigendem Schlupf $\Delta v$ erhöht sich der Adhäsionsbeiwert bis zu einem gewissen Maximum, den er für die Kurven 1, 2 und 3 jeweils bei $\Delta v_{opt1}$, $\Delta v_{opt2}$ und $\Delta v_{opt3}$ annimmt. Nach Erreichen dieses Maximums fällt der Kurvenverlauf wieder ab. Aus den Kurven kann man erkennen, dass der Adhäsionsbeiwert stark vom Schlupf zwischen Rad und Schiene abhängt, so dass auch das Maß an Bremskraft, das wirksam auf die Schiene übertragen werden kann, stark vom Schlupf abhängt. Bei Kenntnis eines oder mehrerer zusammengehörender Wertepaare von Schlupf und Adhäsionsbeiwert lässt sich schließen, auf welcher Kennlinie von Schlupf und Adhäsionsbeiwert sich ein Schienenfahrzeug befindet. Entsprechend kann eine Schlupfregelung oder Steuerung derart durchgeführt werden, dass der Schlupf als Regelgröße verwendet wird, so dass sich ein maximaler Adhäsionsbeiwert einstellen kann. Mit $\mu_{fix}$ ist ein Adhäsionsbeiwert eingezeichnet, der im Allgemeinen als konstant angenommen wird und für Bremsvorgänge von Schienenfahrzeugen angesetzt wird. Dieser ist so gewählt, dass unter normalen Bedingungen kein Gleiten oder Blockieren des gebremsten Rades erfolgt.

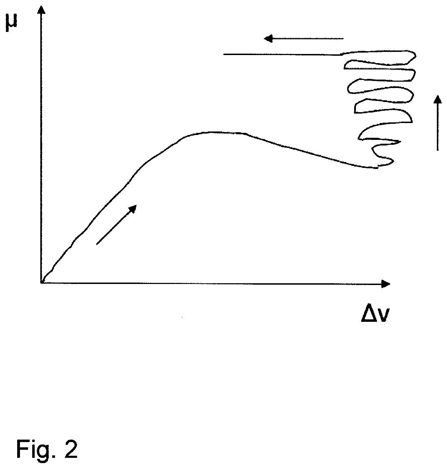

Figur 2 zeigt ein schematisches Diagramm mit einer Fortsetzung der Kurve 2 aus Figur 1 noch höhere Schlupfwerte. Es ist zu erkennen, dass mit steigendem Schlupf nach Erreichen des Optimalwertes $\Delta v_{opt2}$ bei nasser Schiene der Adhäsionsbeiwert abfällt. Er fällt allerdings nur bis zu einem gewissen Punkt, bis ein Gleiten oder Blockieren des Rades einsetzt. Durch diesen Effekt kann es vorkommen, dass das Rad sich durch Reibungseffekte stark erwärmt beziehungsweise über die Schiene geschoben wird, um einerseits seine eigene Kontaktfläche und andererseits die Kontaktfläche der Schiene zu reinigen. Dadurch kann der Adhäsionsbeiwert des Kontakts zwischen Rad und Schiene sich verbessern oder erhöhen. Dies kann zu einem verringerten Schlupf führen und das Rad kann aus dem Blockierzustand gebracht werden. Dieser Vorgang kann sich wiederholen, bis der Kontakt zwischen Rad und Schiene bis zu einem maximalen Grad gereinigt ist. Somit kann die in Figur 2 gezeigte Kurve als ein zeitlicher Verlauf des Verhaltens eines Rades angesehen werden, das wiederholt in einen Blockierzustand getrieben wird, indem der Schlupf erhöht wird. Daher kann durch systematisches Blockieren eines Rades einerseits der Kontakt des blockierten Rades mit der Schiene und damit sein Adhäsionswert verbessert werden. Andererseits wirkt sich die Verbesserung der Schienenoberfläche, beispielsweise indem Wasser oder Blätter von der Schiene entfernt werden, auch positiv für den Adhäsionsbeiwert nachfolgender Räder aus.

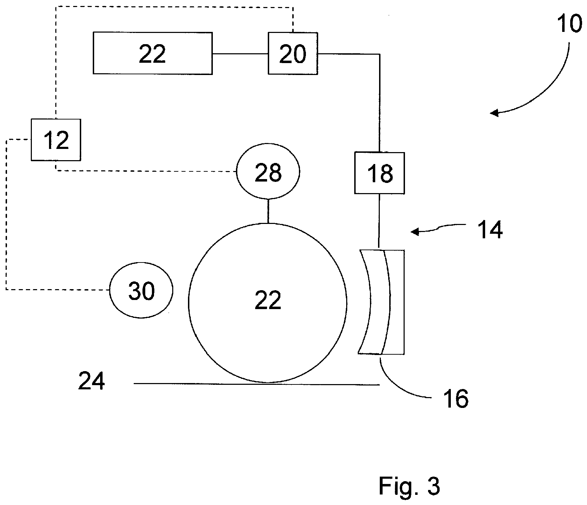

Figur 3 zeigt schematisch ein Bremssystem 10 mit einer Bremssteuereinrichtung 12. Elektrische Signalverbindungen sich durch gestrichelte Linien, pneumatische oder mechanische Verbindungen durch gezogene Linien dargestellt. Das Bremssystem 10 umfasst in diesem Beispiel als Reibungsbremseinrichtung eine pneumatische Bremseinrichtung 14 mit einem Bremsklotz 16 und einem pneumatisch betriebenen Druckzylinder 18, der über eine pneumatische Leitung mit einer Steuerventileinrichtung 20 verbunden ist. Über die Steuerventileinrichtung 20 kann Druckluft in den Druckzylinder 18 einströmen und/oder abgelassen werden. Die Steuerventileinrichtung 20 kann ein oder mehrere Magnetventil umfassen und/oder durch magnetische Vorsteuerventile vorgesteuert sein. Der Bremsklotz 16 kann dann, wenn er über den Zylinder 18 mit einer Bremskraft beaufschlagt wird, auf ein Rad 22 einwirken, um dieses zu bremsen. Zwischen dem Rad 22 und dem Bremsklotz 16 wirkt dabei ein erster Reibungsbeiwert. Das Rad 22 wird auf einer Schiene 24 geführt. Zwischen Rad 22 und Schiene 24 wirkt ein Adhäsionsbeiwert, der sich aus verschiedenen Effekten wie Gleitreibung und Haftreibung an verschiedenen Kontaktbereichen zwischen Rad und Schiene ergibt. Der Adhäsionsbeiwert bestimmt den maximalen Anteil an Bremskraft, der auf die Schiene übertragbar ist. Die Bremssteuereinrichtung 12 des Bremssystems 10 ist dazu vorgesehen, mit der Steuerventileinrichtung 20 verbunden oder verbindbar zu sein. Die Bremssteuereinrichtung 12 kann entsprechend die Steuerventileinrichtung 20 ansteuern und somit den dem Druckzylinder 18 der pneumatischen Bremseinrichtung 14 zugeführten Bremsdruck steuern oder regeln. Die Bremssteuereinrichtung 12 ist über eine Datenübertragungseinrichtung, die kabelgebunden oder über Funk wirken kann, mit einem Drehzahlsensor 28 verbunden, welcher die Drehzahl des Rades 22 und/oder einer Achse des Rades 22 erfasst. Über eine weitere Datenübertragungsleitung ist die Bremssteuereinrichtung 12 mit einem Adhäsionssensor oder einer Adhäsionsbeiwerterfassungseinrichtung 30 verbunden, über welchen sie Daten bezüglich eines tatsächlichen Adhäsionsbeiwertes erhält. Basierend auf Daten vom Adhäsionssensor 30 bestimmt die Bremssteuereinrichtung 12 einen tatsächlichen Adhäsionsbeiwert. Die Bremssteuereinrichtung 12 kann auch basierend auf Daten des Drehzahlsensors 28 einen Schlupf ermitteln, wenn ihr ein Fahrtgeschwindigkeitssignal zugeführt wird, beispielsweise über einen zentralen Fahrzeugrechner oder einen gezeigten Sensor. Basierend auf dem tatsächlichen Adhäsionsbeiwert berechnet die Bremssteuereinrichtung 12 einen Bremssollwert, der in diesem Beispiel ein Bremsdruck ist. Basierend auf diesem Bremssollwert wird die pneumatische Bremseinrichtung 14 zum Bremsen des Rades 22 angesteuert. Es versteht sich, dass die Bremssteuereinrichtung 12 mehr als ein Rad beziehungsweise mehr als eine pneumatische Bremseinrichtung ansteuern kann.

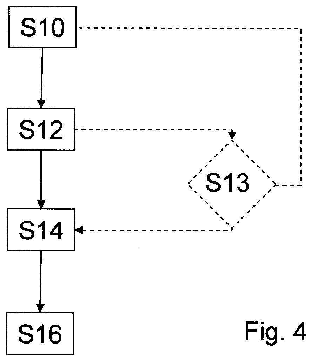

Figur 4 zeigt ein Flussdiagramm eines entsprechenden Verfahrens. In einem Schritt S10 empfängt eine Bremssteuereinrichtung Daten bezüglich eines tatsächlichen Adhäsionsbeiwertes und/oder Drehzahldaten für ein Rad und/oder Fahrtgeschwindigkeitsdaten. Es kann vorgesehen sein, dass die Bremssteuereinrichtung aus einem zeitlichen Verlauf der Fahrgeschwindigkeitsdaten und der Drehzahldaten für ein oder mehrere Räder auf den Adhäsionsbeiwert schließt. In Schritt S12 bestimmt die Bremssteuereinrichtung einen tatsächlichen Adhäsionsbeiwert zwischen einem Rad des Schienenfahrzeugs und eine mit einem zu bremsenden Rad in Kontakt stehenden Schiene. In Schritt S14 berechnet die Bremssteuereinrichtung einen Bremssollwert basierend auf dem tatsächlichen Adhäsionsbeiwert. In diesem Beispiel kann der Bremssollwert ein Sollbremsdruck, eine Sollbetätigungskraft oder eine Sollbremskraft oder ein Sollbremsmoment sein.

Basierend auf dem berechneten Adhäsionsbeiwert kann die Bremssteuereinrichtung in einem Schritt S16 die pneumatische Bremseinrichtung zum Bremsen basierend auf dem Bremssollwert ansteuern. Dabei kann beispielsweise die Bremssteuereinrichtung eine Steuerventileinrichtung der pneumatischen Bremseinrichtung derart regeln, dass ein Sollbremsdruck eingestellt wird. In einem optionalen Schritt S13 kann nach dem Berechnen eines tatsächlichen Adhäsionsbeiwerts in Schritt S12 eine Überprüfung stattfinden, ob tatsächlich gebremst werden soll. Ist dies der Fall, kann zu Schritt S14 verzweigt werden. Ist dies nicht der Fall, kann wieder zu Schritt S10 verzweigt werden, um in periodischen Abständen einen tatsächlichen Adhäsionsbeiwert zu bestimmen.

**Bezugszeichenliste**

| | |
|---|---|
| 10 | Bremssystem |
| 12 | Bremssteuereinrichtung |
| 14 | Bremseinrichtung |
| 16 | Bremsklotz |
| 18 | Druckzylinder |
| 20 | Steuerventileinrichtung |
| 22 | Rad |
| 24 | Schiene |
| 28 | Drehzahlsensor |
| 30 | Adhäsionssensor |

**Patentansprüche**

1. Bremssteuereinrichtung (12) für Schienenfahrzeuge mit einer Reibungsbremseinrichtung (14), wobei die Bremssteuereinrichtung (12) dazu ausgelegt ist, einen tatsächlichen Adhäsionsbeiwert zwischen einem Rad (22) des Schienenfahrzeugs und einer mit dem Rad (22) in Kontakt stehenden Schiene (24) zu ermitteln, wobei die Bremssteuereinrichtung (12) ferner dazu ausgelegt ist, einen Bremssollwert basierend auf dem tatsächlichen Adhäsionsbeiwert zu berechnen und die Reibungsbremseinrichtung (14) zum Bremsen mindestens eines durch die Reibungsbremseinrichtung zu bremsenden Rades (22) basierend auf dem Bremssollwert anzusteuern, und wobei die Bremssteuereinrichtung (12) ferner dazu ausgelegt ist, einen Schlupf zwischen dem mindestens einen zu bremsenden Rad (22) und der Schiene (24) zu ermitteln und eine Schlupfregelung durchzuführen,
**dadurch gekennzeichnet,**
**dass** die Bremssteuereinrichtung (12) dazu ausgelegt ist, die Schlupfregelung derart auszuführen, dass die Bremssteuereinrichtung (12) das zu bremsende Rad zeitweise in einen Blockierzustand steuert.

2. Bremssteuereinrichtung nach Anspruch 1, wobei der Bremssollwert ein pneumatischer oder hydraulischer Bremsdruck oder ein Bremsstrom ist, welcher der Reibungsbremseinrichtung (14) zugeführt wird.

3. Bremssteuereinrichtung nach Anspruch 1, wobei der Bremssollwert eine Drehzahl ist, insbesondere eine Drehzahl des Rades (22).

4. Bremssteuereinrichtung nach einem der Ansprüche 1 bis 3, wobei die Bremssteuereinrichtung (12) mit einer Sensoreinrichtung (30) verbunden oder verbindbar ist, welche zur Ermittlung des tatsächlichen Adhäsionsbeiwertes Daten an die Bremssteuereinrichtung (12) zu übertragen vermag.

5. Bremssteuereinrichtung nach einem der Ansprüche 1 bis 4, wobei die Bremssteuereinrichtung (12) dazu ausgelegt ist, eine Schlupfregelung für mindestens ein erstes Rad (22) und mindestens ein zweites Rad derart auszuführen, dass das erste Rad (22) in einen Blockierzustand gesteuert wird und das zweite Rad in einen nicht blockierenden Zustand gesteuert wird.

6. Bremssystem (10) für Schienenfahrzeuge mit einer Reibungsbremseinrichtung (14), welches eine Bremssteuereinrichtung (12) nach einem der Ansprüche 1 bis 5 umfasst.

7. Verfahren zum Steuern einer Bremsung für Schienenfahrzeuge mit einer Reibungsbremseinrichtung (14), insbesondere durch eine Bremssteuereinrichtung (12) nach einem der Ansprüche 1 bis 6, mit den Schritten:

Bestimmen eines tatsächlichen Adhäsionswertes zwischen einem Rad des Schienenfahrzeugs und einer mit dem Rad in Kontakt stehenden Schiene (24);
Berechnen eines Bremssollwertes basierend auf dem tatsächlichen Adhäsionsbeiwert;
Ansteuern der Reibungsbremseinrichtung (14) basierend auf dem Bremssollwert zum Bremsen eines zu bremsenden Rades (22) durch die Bremssteuereinrichtung (14), und
Ermitteln eines Schlupfes zwischen dem mindestens einen zu bremsenden Rad (22) und der Schiene (24) und Durchführen einer Schlupfregelung,
**gekennzeichnet durch**
Ausführen der Schlupfregelung derart, dass das zu bremsende Rad zeitweise in einen Blockierzustand gesteuert wird.

8. Computerprogrammprodukt, welches auf einem Speichermedium gespeichert, wobei das Computerprogrammprodukt auf einer Bremssteuereinrichtung (12) lauffähig ist und es vermag, die Bremssteuereinrichtung (12) dazu zu instruieren, ein Verfahren nach Anspruch 7 auszuführen.

**Claims**

1. Brake control device (12) for rail vehicles having a friction brake device (14), wherein the brake control device (12) is configured to determine an actual adhesion coefficient between a wheel (22) of the rail vehicle and a rail (24) that is in contact with the wheel (22), wherein the brake control device (12) is further configured to calculate a braking target value based on the actual adhesion coefficient and to actuate the friction brake device (14) to brake at least one wheel (22) to be braked by the friction brake device based on the braking target value, and

wherein the brake control device (12) is further configured to determine a slip between the at least one wheel (22) to be braked and the rail (24) and to perform a slip control,

**characterised in that**

the brake control device (12) is configured to perform the slip control in such a way that the brake control device (12) controls the wheel to be braked intermittently into a locking state.

2. Brake control device according to claim 1, wherein the braking target value is a pneumatic or hydraulic brake pressure or a brake current, which is supplied to the friction brake device (14).

3. Brake control device according to claim 1, wherein the braking target value is a speed, in particular a speed of the wheel (22).

4. Brake control device according to one of claims 1 to 3, wherein the brake control device (12) is, or can be, connected to a sensor means (30), which can transmit data to the brake control device (12) to determine the actual adhesion coefficient.

5. Brake control device according to one of claims 1 to 4, wherein the brake control device (12) is configured to perform a slip control for at least one first wheel (22) and at least one second wheel in such a way that the first wheel (22) is controlled into a locking state and the second wheel is controlled into a non-locking state.

6. Braking system (10) for rail vehicles having a friction brake device (14), which comprises a brake control device (12) according to one of claims 1 to 5.

7. Method for controlling a braking process for rail vehicles having a friction brake device (14), in particular through a brake control device (12) according to one of claims 1 to 6, having the steps:

- determine an actual adhesion coefficient between a wheel of the rail vehicle and a rail (24) that is in contact with the wheel;
- calculate a braking target value based on the actual adhesion coefficient;
- actuate the friction brake device (14), based on the braking target value, to brake a wheel (22) to be braked through the brake control device (14), and
- determine a slip between the at least one wheel (22) to be braked and the rail (24) and perform a slip control, **characterised by**

performing the slip control in such a way that the wheel to be braked is intermittently controlled into a locking state.

8. Computer program product stored on a storage medium, wherein the computer program product can run on a brake control device (12) and is able to instruct the brake control device (12) to perform a method according to claim 7.

**Revendications**

1. Dispositif (12) de commande de freinage pour des véhicules ferroviaires, comprenant un dispositif (14) de frein à friction,

dans lequel le dispositif (12) de commande de freinage est conçu pour déterminer un coefficient d'adhérence réel entre une roue (22) du véhicule ferroviaire et un rail (24) en contact avec la roue (22),

dans lequel le dispositif (12) de commande de freinage est conçu en outre pour calculer une valeur de consigne de freinage sur la base du coefficient d'adhérence réel et pour commander, sur la base de la valeur de consigne de freinage, le dispositif (14) de frein à friction pour freiner au moins une roue (22) à freiner par le dispositif de frein à friction et

dans lequel le dispositif (12) de commande de freinage est conçu en outre pour déterminer un pseudo glissement entre la au moins une roue (22) à freiner et le rail (24) et pour effectuer une régulation du pseudo-glissement, **caractérisé**

**en ce que** le dispositif (12) de commande de freinage est conçu pour exécuter la régulation du pseudo-glissement de manière à ce que le dispositif (12) de commande de freinage mette la roue à freiner, de temps en temps, dans un état bloqué.

2. Dispositif de commande de freinage suivant la revendication 1, dans lequel la valeur de consigne de freinage est une pression de freinage pneumatique ou hydraulique, ou un courant de freinage, qui est envoyé au dispositif (14) de frein à friction.

3. Dispositif de commande de freinage suivant la revendication 1, dans lequel la valeur de consigne de freinage est une vitesse de rotation, notamment une vitesse de rotation de la roue (22).

4. Dispositif de commande de freinage suivant l'une des revendications 1 à 3, dans lequel le dispositif (12) de commande de freinage est ou peut être relié à un dispositif (30) capteur, qui, pour la transmission du coefficient d'adhérence réel, dispose de données à transmettre au dispositif (12) de commande de freinage.

5. Dispositif de commande de freinage suivant l'une des revendications 1 à 4, dans lequel le dispositif (12) de commande de freinage est conçu pour exécuter une régulation du pseudo-glissement, pour au moins une première roue (22) et au moins une deuxième roue, de manière à mettre la première roue dans un état bloqué et à mettre la deuxième roue dans un état non bloqué.

6. Système (10) de freinage pour des véhicules ferroviaires, comprenant un dispositif (14) de frein à friction, qui comprend un dispositif (12) de commande de freinage suivant l'une des revendications 1 à 5.

7. Procédé de commande d'un freinage pour des véhicules ferroviaires, par un dispositif (14) de frein à friction, notamment par un dispositif (12) de commande de freinage suivant l'une des revendication 1 à 6, comprenant les stades :

   détermination d'un coefficient d'adhérence réel entre une roue du véhicule ferroviaire et un rail (24) en contact avec la roue ;
   calcul d'une valeur de consigne de freinage sur la base du coefficient d'adhérence réel ;
   commande du dispositif (14) de frein à friction sur la base de la valeur de consigne de freinage, pour freiner une roue (22) à freiner par le dispositif (14) de commande de freinage et
   détermination d'un pseudo glissement entre la au moins une roue (22) à freiner et le rail (24) et mise en oeuvre d'une régulation du pseudo-glissement,
   **caractérisé par**
   l'exécution de la régulation du pseudo-glissement, de manière à mettre la roue à freiner, de temps en temps, dans un état bloqué.

8. Produit de programme d'ordinateur, qui est mémorisé sur un support de mémorisation, dans lequel le produit de programme d'ordinateur peut passer sur un dispositif (12) de commande de freinage et peut instruire le dispositif (12) de commande de freinage pour qu'il effectue un procédé suivant la revendication 7.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2147840 A1